# EUROPÄISCHE PATENTANMELDUNG

(11) **EP 2 020 676 A2**
(43) Veröffentlichungstag der Anmeldung: **04.02.2009**
(21) Anmeldenummer: 08156566.5
(22) Anmeldetag: 20.05.2008
(51) Int. Cl.: H01K 1/34

(54) **Elektrisch Lampe mit einem Aussenkolben und einer Einbaulampe sowie ein Verfahren zu deren Herstllung**

(30) Priorität: 30.07.2007 DE 102007035595
(71) Anmelder: Osram Gesellschaft mit beschränkter Haftung, 81543 München (DE)
(72) Erfinder: Naujoks, Bernd, 940, Néve Zamky (SK); Stark, Roland, 91809, Wellheim (DE)

(57) **Zusammenfassung**

Die Erfindung betrifft eine einseitig gesockelte elektrische Lampe (1) mit einem in einem Sockel (2) gelagerten Außenkolben (3) und mindestens einer innerhalb des Außenkolbens (3) angeordneten Einbaulampe (4), vorzugsweise einer Hochvolt-Halogenlampe, und mindestens zwei Stromzuführungsdrähten (9, 9a, 9b) von dem Sockel (2) zu der Einbaulampe (4). Die Erfindung betrifft ebenso ein Verfahren zur Herstellung einer derartigen Lampe.

Die mindestens zwei Stromzuführungsdrähte (9, 9a, 9b) sind von einem vorzugsweise zylindrischen Kolben (6) aus einem nichtleitenden Werkstoff umgeben und der zylindrische Kolben (6) ist mit dem Außenkolben (3) verbunden, vorzugsweise verschmolzen.

## Beschreibung

### Technisches Gebiet

Die Erfindung betrifft eine einseitig gesockelte elektrische Lampe mit einem in einem Sockel gelagerten Außenkolben und mindestens einer innerhalb des Außenkolbens angeordneten Einbaulampe, vorzugsweise einer Hochvolt-Halogenlampe, und mindestens zwei Stromzuführungsdrähten von dem Sockel zu der Einbaulampe. Die Erfindung betrifft weiterhin ein Verfahren zur Herstellung einer einseitig gesockelten elektrischen Lampe mit einem in einem Sockel gelagerten Außenkolben und mindestens einer innerhalb des Außenkolbens angeordneten Einbaulampe, vorzugsweise einer Hochvolt-Halogenlampe, und mindestens zwei von dem Sockel zu der Einbaulampe führenden Stromzuführungsdrähten.

### Stand der Technik

Halogenglühlampen werden aufgrund ihrer hohen Lebensdauer und der angenehmen Lichtqualität zunehmend herkömmlichen Glühlampen vorgezogen. Um einen möglichst einfachen Ersatz bestehender Glühlampen durch Halogenglühlampen zu ermöglichen und gleichzeitig die optische Anmutung einer herkömmlichen Glühlampe aus ästhetischen oder funktionalen Gründen beizubehalten, werden häufig Lampen verwendet, bei denen die Außenkontur und damit insbesondere der Außenkolben und der Sockel einer herkömmlicher Glühlampe entsprechen, während innerhalb des Außenkolbens eine Halogenglühlampe als Einbaulampe angeordnet ist. Derartige Lampen werden beispielsweise von der OSRAM GmbH unter der Bezeichnung "HALOLUX® CLASSIC" hergestellt und vertrieben.

Um das Erscheinungsbild wie auch die Leuchteigenschaften einer derartigen Lampe denjenigen einer herkömmlichen Glühlampe anzugleichen, muss der Glühdraht der Einbaulampe annähernd an der gleichen Stelle wie der Glühdraht einer vergleichbaren herkömmlichen Glühlampe angeordnet werden. Dazu muss die wesentlich kompaktere Halogenlampe mittels einer Halterung im Außenkolben positioniert werden.

Aus der EP 0 498 256 ist es bekannt, die Einbaulampe direkt an zwei Stromzuführungsdrähten zu befestigen und somit diese als Halterung zu verwenden. Dies ist aber nur mit relativ kurzen Stromzuführungsdrähten möglich, da ansonsten die Lampe extrem erschütterungsempfindlich wird und bei einem Bruch des Außenkolbens die Netzspannung führenden Stromzuführungsdrähte freiliegen.

Eine bei den oben erwähnten "HALOLUX® CLASSIC" verwendete Technologie zur Positionierung der Einbaulampe besteht darin, einen gläsernen Tellerfuß vorzusehen, der in den Außenkolben eingeschmolzen wird. Der Tellerfuß trägt ein aus Metall gefertigtes Gestell, durch das wiederum die Halogeneinbaulampe gehalten wird. Weiterhin sind in den Tellerfuß Stromzuführungsdrähte eingeschmolzen, an denen die Stromzuführungsdrähte der Einbaulampe angeschweißt werden. Dieser Aufbau benötigt für die Durchführung der Stromzuführungsdrähte durch den gläsernen Tellerfuß einen dreiteiligen Aufbau und ist generell durch die Kombination von metallischen und gläsernen Komponenten sehr aufwändig.

Die DE 10 2005 051 076 offenbart eine Halterung für die Einbaulampe, die aus einem metallischen Montageclip besteht, in den die Einbaulampe eingeschoben wird. Der Montageclip ist am gläsernen Fuß des Außenkolbens angebracht, was allerdings sehr aufwändig ist, da der gläserne Fuß ein sehr komplexes Bauteil darstellt, das beispielsweise Pumpstängel und eingeschmolzene Stromzuführungsdrähte umfasst. Bei der Verwendung eines metallischen Montageclips besteht zudem die Gefahr einer Beschädigung des Außenkolbens bei Montage oder Betrieb der Lampe und es muss sichergestellt werden, dass keine stromführenden Teile mit dem Clip in Verbindung kommen. Weiterhin ist die metallische Halterung optisch sehr auffällig und stört das von einer klassischen Glühbirne bekannte, transparente Erscheinungsbild erheblich.

### Darstellung der Erfindung

Der Erfindung liegt daher bezüglich der Lampe die Aufgabe zugrunde, eine einseitig gesockelte elektrische Lampe mit einem in einem Sockel gelagerten Außenkolben und mindestens einer innerhalb des Außenkolbens angeordneten Einbaulampe, vorzugsweise einer Hochvolt-Halogenlampe, und mindestens zwei Stromzuführungsdrähten von dem Sockel zu der Einbaulampe zu schaffen, die robust und einfach herstellbar ist und bei der die Stromzuführungsdrähte bei einem Bruch des Außenkolbens zuverlässig vor Berührung geschützt sind.

Der Erfindung liegt weiterhin bezüglich des Verfahrens zur Herstellung einer Lampe die Aufgabe zugrunde, ein Verfahren zur Herstellung einer einseitig gesockelten elektrischen Lampe mit einem in einem Sockel gelagerten Außenkolben und mindestens einer innerhalb des Außenkolbens angeordneten Einbaulampe, vorzugsweise einer Hochvolt-Halogenlampe, und mindestens zwei Stromzuführungsdrähten von dem Sockel zu der Einbaulampe zu schaffen, das eine einfache Herstellung einer derartigen Lampe ermöglicht.

Die Aufgabe wird bezüglich der Lampe erfindungsgemäß dadurch gelöst, dass die mindestens zwei Stromzuführungsdrähte von einem vorzugsweise zylindrischen Kolben aus einem nichtleitenden Werkstoff umgeben sind und der zylindrische Kolben mit dem Außenkolben verbunden, vorzugsweise verschmolzen, ist.

Ein derartiger Kolben ist aufgrund der einfachen Geometrie mit wesentlich weniger Aufwand herstellbar als beispielsweise ein Tellerfuß und bietet einen guten Berührschutz für die Stromzuführungsdrähte. Die Verbindung mit dem Außenkolben ermöglicht es, den vorzugsweise zylindrischen Kolben sicher zu halten und optimal zu positionieren. Dadurch kann der vorzugsweise zylindrische Kolben beispielsweise auch zur Halterung und/oder Stabilisierung der Einbaulampe verwendet werden.

Indem der zylindrische Kolben aus einem lichtdurchlässigen Werkstoff, vorzugsweise identisch mit dem für den Außenkolben verwendeten Werkstoff, insbesondere Glas, gebildet ist, kann mit geringem Aufwand, beispielsweise durch Verschmelzung, eine gute Verbindung zwischen den beiden Kolben hergestellt und eine Abschattung des von der Einbaulampe ausgehenden Lichts vermieden werden. Insbesondere kann der vorzugsweise zylindrische Kolben die Einbaulampe annähernd vollständig umhüllen und somit einen zusätzlichen Schutz für diese bilden. Fehler, wie beispielsweise eine Beschädigung der Stromzuführungsdrähte oder der Einbaulampe, sind auch nach Fertigstellung der Lampe noch gut erkennbar. Der optische Eindruck der Lampe ist zudem weitgehend identisch mit dem einer klassischen Glühlampe.

Es ist von besonderem Vorteil, wenn die Einbaulampe von dem vorzugsweise zylindrischen Kolben zumindest teilweise umgeben ist. Dadurch wird ein besonders guter Schutz erreicht und die Einbaulampe kann seitlich an dem Kolben abgestützt oder geführt werden, wodurch die Stromzuführungsdrähte von diesen Kräften zumindest teilweise entlastet werden und somit weniger aufwändig ausgeführt werden können.

Es ist von Vorteil, wenn mindestens eine Haltevorrichtung zur Befestigung der Einbaulampe an dem vorzugsweise zylindrischen Kolben vorgesehen ist. Dadurch kann der zylindrische Kolben Haltekräfte der Einbaulampe übernehmen. Damit werden die Stromzuführungsdrähte von diesen Kräften entlastet und die Ausführung der Stromzuführungsdrähte sowie deren Halterungen können einfacher und kostengünstiger ausgeführt werden.

Es ist ebenfalls von besonderem Vorteil, wenn die Haltevorrichtung mindestens ein Federelement aufweist. Federelemente sind besonders gut geeignet, um eine kraftschlüssige Verbindung zwischen Bauteilen herzustellen und dabei Maßtoleranzen oder Unebenheiten auszugleichen.

Ebenso ist es vorteilhaft, wenn die Haltevorrichtung mindestens einen Halteclip für die Einbaulampe, umfassend mindestens zwei, vorzugsweise annähernd planparallel angeordnete, Haltelaschen, aufweist. Ein Halteclip ermöglicht eine einfache Montage der Einbaulampe. Insbesondere bei den typischerweise verwendeten Einbaulampen mit Quetschsockel sind planparallel angeordnete Haltelaschen besonders geeignet.

Weiterhin ist es zweckmäßig, wenn mindestens eine der Haltelaschen mindestens ein Federelement umfasst, insbesondere als Federelement ausgebildet ist. Dies ermöglicht eine einfache Halterung der Einbaulampe mit geringem Herstellaufwand für die Haltelaschen.

Ebenso ist es vorteilhaft, wenn die Haltevorrichtung mittels mindestens eines Federelements mit dem vorzugsweise zylindrischen Kolben kraftschlüssig verbindbar ist. Dadurch wird eine einfache und sichere Verbindung erreicht, die gegenüber Maßungenauigkeiten und Unebenheiten unempfindlich ist.

Weiterhin ist es von Vorteil, wenn das Federelement mit mindestens einem annähernd kreisbogenförmigen Halteelement in Wirkverbindung steht, wobei der Durchmesser des Kreisbogens annähernd dem Innendurchmesser oder dem Außendurchmesser des zylindrischen Kolbens entspricht. Durch das Federelement wird das kreisbogenförmige Element an den zylindrischen Kolben gepresst. Die Formgebung des kreisbogenförmigen Elements ergibt ein große Anlagefläche an dem zylindrischen Kolben und somit eine gute Verbindung zwischen diesen beiden Elementen.

Vorteilhafterweise sind das annähernd kreisbogenförmige Halteelement und die Haltelaschen des Halteclips axial voneinander beabstandet angeordnet. Bei dieser Anordnung kann die Einbaulampe oberhalb des zylindrischen Kolbens angeordnet werden und der zylindrische Kolben kann kürzer ausgeführt werden.

Ebenso ist es zweckmäßig, wenn die Kraftrichtung des Federelements des annähernd kreisbogenförmigen Halteelements und der Haltelaschen des Halteclips annähernd orthogonal zueinander angeordnet sind. Diese Anordnung ermöglicht einen einfachen Zusammenbau, da die Kraftwirkung der Haltevorrichtung auf die Einbaulampe und die Kraftwirkung der Haltevorrichtung auf den zylindrischen Kolben orthogonal zueinander angeordnet sind und sich somit die Haltevorrichtungen nicht gegenseitig beeinflussen.

In einer weiteren Ausgestaltung der Erfindung sind die Kraftrichtung des Federelements des annähernd kreisbogenförmige Halteelement und der Haltelaschen annähernd parallel zueinander angeordnet. Diese Anordnung ermöglicht einen Platz sparenden und einfachen Aufbau und es kann ein gemeinsames Federelement für Haltelasche und kreisbogenförmiges Halteelement verwendet werden.

Es ist weiterhin von Vorteil, wenn die Haltevorrichtung ein im Wesentlichen scheibenförmiges Element mit einer Ausnehmung zur Aufnahme der Einbaulampe aufweist, wobei das scheibenförmige Element annähernd die Querschnittsfläche des zylindrischen Kolbens aufweist. Eine derartige Scheibe kann einfach auf oder in dem zylindrischen Kolben gehalten werden und beansprucht wenig Einbauraum.

Zweckmäßigerweise weist die Ausnehmung zur Aufnahme der Einbaulampe annähernd die Kontur der Querschnittsfläche des Sockels der Einbaulampe auf. Dies ermöglicht die Halterung der Einbaulampe in der Ausnehmung ohne bzw. mit nur wenigen zusätzlichen Hilfsmitteln.

Es ist ebenfalls zweckmäßig, wenn das scheibenförmige Element als Stanzteil aus einem metallischen Werkstoff gebildet ist. Dies ermöglicht eine einfache und kostengünstige Fertigung der Haltevorrichtung.

Es ist von besonderem Vorteil, wenn Federlaschen zur Fixierung des scheibenförmigen Elements in dem zylindrischen Kolben und/oder der Einbaulampe in dem scheibenförmigen Element vorgesehen sind. Federlaschen sind, insbesondere bei metallischen Stanzteilen, einfach zu fertigen und ermöglichen eine einfache Montage sowie eine sichere Halterung.

In einer weiteren vorteilhaften Ausführung der Erfindung sind die Stromzuführungsdrähte als Haltevorrichtung für die Einbaulampe ausgeführt. Dadurch kann auf eine eigenständige Haltevorrichtung verzichtet werden.

Es ist vorteilhaft, wenn zwischen dem Kolben der Einbaulampe und dem zylindrischen Kolben mindestens ein um den Kolben der Einbaulampe vorzugsweise spiralförmig und/oder ringförmig gewundener Draht angeordnet ist. Der Draht verhindert den direkten Kontakt zwischen Einbaulampe und Kolben, was insbesondere bei einem Glaskolben vorteilhaft ist, da so der Kontakt von Glas auf Glas vermieden wird und Beschädigungen am Kolben beziehungsweise der Einbaulampe verhindert werden.

Weiterhin ist es zweckmäßig, wenn der gewundene Draht mit einem von dem Sockel zu der Einbaulampe führenden Stromzuführungsdraht verbunden, insbesondere verschweißt, ist. Dadurch ist eine einfache Halterung für den gewundenen Draht möglich.

Vorteilhafterweise sind der gewundene Draht und mindestens ein von dem Sockel zu der Einbaulampe führender Stromzuführungsdraht einstückig ausgebildet. Dadurch wird ein besonders einfacher Aufbau erzielt, der Herstellaufwand reduziert und eine Schwächung durch Verbindungsstellen und/oder Schweißungen vermieden.

Es ist ebenfalls von Vorteil, wenn mindestens ein von dem Sockel zu der Einbaulampe führender Stromzuführungsdraht mit mindestens einer Stromzuführung der Einbaulampe durch Schweißung verbunden ist. Dadurch wird mit einfachen Mitteln eine Verbindung hergestellt, die sowohl mechanische Kräfte als auch elektrischen Strom sicher und zuverlässig übertragen kann.

Weiterhin ist es zweckmäßig, wenn mindestens ein von dem Sockel zu der Einbaulampe führender Stromzuführungsdraht im Bereich des Sockels U-förmig um den zylindrischen Kolben geführt ist. Dadurch wird eine einfache Kontaktierung des Stromzuführungsdrahtes zu dem seitlichen Sockelbereich möglich, wobei gleichzeitig eine sichere Halterung des Stromzuführungsdrahtes ermöglicht wird.

Vorteilhafterweise sind die Stromzuführungsdrähte aus einer Nickel-Kupfer-Legierung gebildet. Derartige Legierungen bieten sowohl eine gute Leitfähigkeit als auch gute mechanische Eigenschaften und hohe Korrosionsbeständigkeit.

Die Aufgabe wird bezüglich des Verfahrens erfindungsgemäß dadurch gelöst, dass das Verfahren folgende Schritte umfasst:
a) die Einbaulampe wird mit den Stromzuführungsdrähten verbunden, vorzugsweise verschweißt,
b) die Stromzuführungsdrähte werden in einen vorzugsweise zylindrischen Kolben aus einem nichtleitenden Werkstoff eingeführt, so dass die mindestens zwei Stromzuführungsdrähte von dem vorzugsweise zylindrischen Kolben weitgehend umgeben sind,
c) der Außenkolben wird mit dem vorzugsweise zylindrischen Kolben verbunden, vorzugsweise verschmolzen,
d) eine der beiden Stromzuführungsdrähte wird derart seitlich abgebogen, dass Kontakt mit einem Sockel herstellbar ist,
e) der Sockel wird auf den Außenkolben aufgebracht und vorzugsweise mit auf dem Sockel aufgebrachtem Kitt verbunden,
f) die Stromzuführungsdrähte werden abgelängt und mit dem Sockel vorzugsweise durch Lötung verbunden.

Dieses Verfahren ermöglicht eine einfache und effiziente Fertigung einer erfindungsgemäßen Lampe

In einer vorteilhaften Weiterbildung der Erfindung wird zwischen den Schritten a) und b) mindestens einer der Stromzuführungsdrähte ringförmig und/oder spiralförmig um den Kolben der Einbaulampe gewendelt. Dadurch wird eine einfache Montage und eine optimale Anpassung der Wendelung an den Kolben der Einbaulampe realisiert.

Indem mindestens einer der Stromzuführungsdrähte vor der Verbindung mit der Einbaulampe ringförmig und/oder spiralförmig gewendelt wird, kann beim Zusammenbau die Wendel bzw. der Ring als Führung für den Kolben der Einbaulampe verwendet werden und der Wendelungsvorgang bei der Herstellung kann entfallen.

In einer weiteren vorteilhaften Ausgestaltung der Erfindung wird die Einbaulampe vor oder nach dem Schritt a) in eine Haltevorrichtung eingebracht. Eine Einbringung der Einbaulampe in die Haltevorrichtung vor der Durchführung weiterer Schritte ermöglicht es, diese während der weiteren Schritte an der Haltevorrichtung zu halten und zu handhaben.

### Kurze Beschreibung der Zeichnungen

Im Folgenden soll die Erfindung anhand von vier Ausführungsbeispielen. Gleiche beziehungsweise funktional gleiche Bauteile sind mit gleichen Bezugszahlen gekennzeichnet. Die Figuren zeigen:
- Fig. 1: ein erstes Ausführungsbeispiel einer erfindungsgemäßen Lampe in perspektivischer Ansicht,
- Fig. 2: eine erfindungsgemäße Lampe gemäß dem ersten Ausführungsbeispiel in einer Seitenansicht,
- Fig. 3: eine Detaildarstellung der Einbaulampe gemäß dem ersten Ausführungsbeispiel in einer Seitenansicht,
- Fig. 4: ein zweites Ausführungsbeispiel einer erfindungsgemäßen Lampe in einer Seitenansicht,
- Fig. 5: eine Detailansicht einer erfindungsgemäßen Lampe gemäß dem zweiten Ausführungsbeispiel in einer horizontalen Schnittbilddarstellung,
- Fig. 6: eine Detailansicht einer erfindungsgemäßen Lampe gemäß dem zweiten Ausführungsbeispiel in einer Schnittbild- Detailansicht,
- Fig. 7: ein drittes Ausführungsbeispiel einer erfindungsgemäßen Lampe in einer Seitenansicht,
- Fig. 8: eine erfindungsgemäße Lampe gemäß dem dritten Ausführungsbeispiel in einer Detailansicht,
- Fig. 9: ein viertes Ausführungsbeispiel einer erfindungsgemäßen Lampe in einer Seitenansicht,
- Fig. 10: eine erfindungsgemäße Lampe gemäß dem vierten Ausführungsbeispiel in einer seitlichen Detaildarstellung,
- Fig. 11: ein fünftes Ausführungsbeispiel einer erfindungsgemäßen Lampe in einer Schnittbild-Detailansicht,
- Fig. 12: eine erfindungsgemäße Lampe gemäß dem fünften Ausführungsbeispiel in einer weiteren seitlichen Detaildarstellung.

### Bevorzugte Ausführung der Erfindung

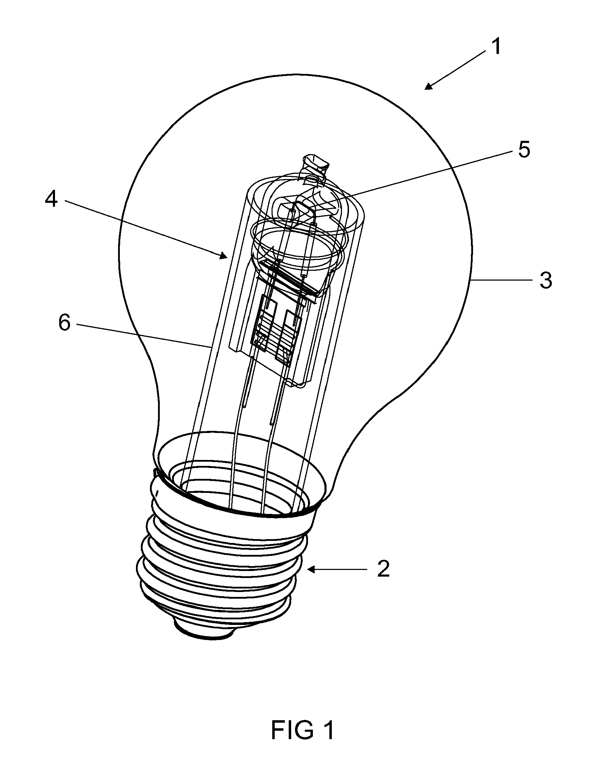

Figur 1 zeigt eine erfindungsgemäße Lampe 1 in einer perspektivischen Darstellung. In einem Sockel 2 des handelsüblichen Typs E27 ist ein Außenkolben 3 vom Typ A55 gehalten. Innerhalb des Außenkolbens 3 ist eine Einbaulampe 4 so angeordnet, dass sich ein Glühdraht 5 der Einbaulampe 4 annähernd an der Stelle innerhalb des Außenkolbens 3 befindet, an der bei einer herkömmlichen Glühlampe ebenfalls der Glühdraht angeordnet ist. Die Einbaulampe 4 ist als so genannte Hochvolt-Halogenlampe in Quetschnoppentechnik ausgeführt und als solche aus dem Stand der Technik bekannt. Weiterhin ist ein zylindrischer Kolben 6 vorhanden, der die Einbaulampe 4 bis annähernd auf voller Länge umgibt und sich bis zum Sockel 2 erstreckt.

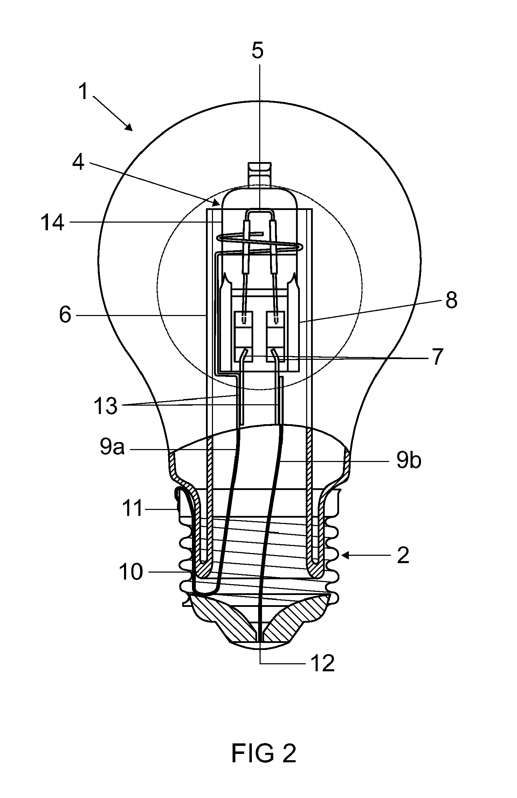

Details des Aufbaus sind in Figur 2 besonders deutlich erkennbar. Der Glühdraht 5 der Einbaulampe 4 ist mit Stromzuführungen 7 verbunden, die aus einem Sockel 8 der Einbaulampe 4 herausragen.

Die Stromzuführungen 7 der Einbaulampe 4 sind an Stromzuführungsdrähten 9a, 9b befestigt, die im Sockel 2 der Lampe 1 gehalten werden. Damit wird die Einbaulampe 4 von den Stromzuführungsdrähten 9a, 9b sowohl gehalten als auch mit Strom versorgt.

Der zylindrische Kolben 6 ist mit dem Außenkolben 3 im Bereich des Lampenfußes 10 verschmolzen. Dadurch entfallen Haltevorrichtungen für den zylindrischen Kolben 6. Die beiden Stromzuführungsdrähte 9a, 9b sind aus dem zylindrischen Kolben 6 herausgeführt und der erste Stromzuführungsdraht 9a U-förmig gebogen und mit einer Sockelhülse 11 des Sockels 2 verlötet, während der zweite Stromzuführungsdraht 9b mit einem Bodenkontakt 12 ebenfalls mittels einer Lötung verbunden ist.

Die beiden Stromzuführungsdrähte 9a, 9b sind aus einer Kupfer-Nickel-Legierung, wie sie beispielsweise unter dem Handelsnamen "Monel" von der Firma Special Metals Corporation vertrieben wird, gefertigt und über Schweißverbindungen 13 mit den Stromzuführungen 7 der Einbaulampe 4 verbunden. Dadurch wird sowohl die mechanische Halterung der Einbaulampe 4 wie auch die elektrische Kontaktierung mittels der Stromzuführungsdrähte 9a, 9b ermöglicht.

Der erste Stromzuführungsdraht 9a ist am Sockel 8 der Einbaulampe 4 vorbei nach oben weitergeführt und um den Kolben 14 der Einbaulampe 4 spiralförmig gewendelt, während der zweite Stromzuführungsdraht 9b an der Stromzuführung 7 der Einbaulampe 4 endet.

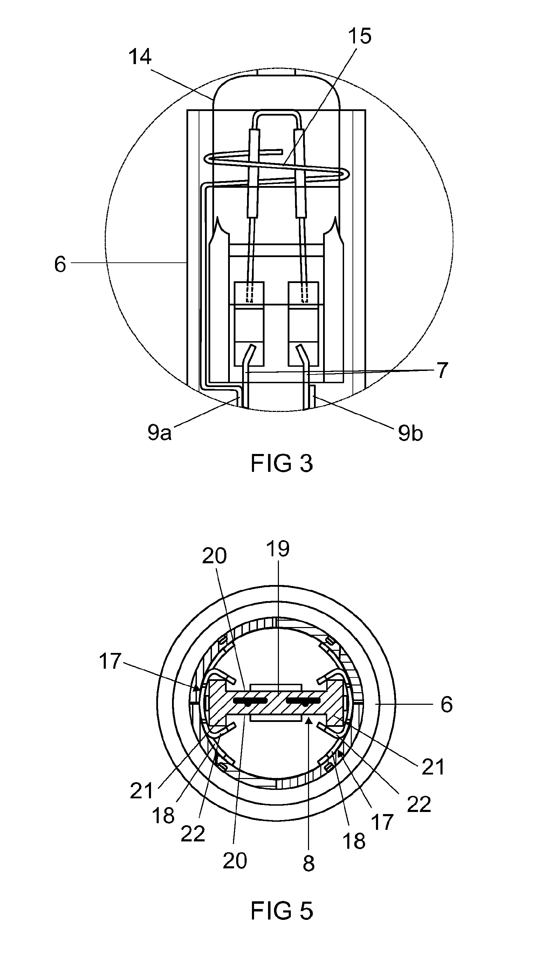

Wie aus Figur 3 ersichtlich, berührt der spiralförmig gewendelte Drahtabschnitt 15 des ersten Stromzuführungsdrahtes 9a im Normalzustand weder den zylindrischen Kolben 6 noch den Kolben 14 der Einbaulampe 4. Gerät die Einbaulampe 4 jedoch, beispielsweise durch Stoßbeanspruchung, ins Schwingen, wird der direkte Kontakt des Kolbens 14 der Einbaulampe 4 mit dem zylindrischen Kolben 6 zuverlässig verhindert und das Anschlagen durch die elastischen Eigenschaften des Drahtabschnitts 15 zusätzlich gedämpft.

Die im ersten Ausführungsbeispiel gezeigte Lampe 1 wird gefertigt, indem zunächst die vom Sockel 2 zu der Einbaulampe 4 reichenden Stromzuführungsdrähte 9a, 9b mit den Stromzuführungen 7 der Einbaulampe 4 verschweißt und dann der erste Stromzuführungsdraht 9a um den Kolben 14 der Einbaulampe 4 spiralförmig gewendelt wird. Danach wird die Einbaulampe 4 in den vorzugsweise zylindrischen Kolben 6 eingeführt, der Außenkolben 3 mit dem vorzugsweise zylindrischen Kolben 6 verschmolzen und der erste Stromzuführungsdraht 9a U-förmig seitlich abgebogen, so dass Kontakt mit dem Sockel 2 herstellbar ist. Danach wird der Sockel 2 auf den Außenkolben 3 aufgebracht und zuvor bereits auf den Sockel 2 aufgebrachter Kitt ausgeheizt, so dass der Sockel 2 mit dem Außenkolben 3 verbunden wird. Abschließend werden die Stromzuführungsdrähte 9a, 9b abgelängt und mit dem Sockel 2 in bekannter Weise durch Löten verbunden. Prinzipiell ist aber auch eine gewundene Vorbiegung des Drahtabschnitts 15 des ersten Stromzuführungsdrahtes 9a denkbar, so dass die Einbaulampe 4 in diese Windung eingeführt werden kann, um danach die Stromzuführungen 7 der Einbaulampe 4 mit den Stromzuführungsdrähten 9a, 9 b zu verbinden.

Der zylindrische Kolben 6 ist im vorliegenden Ausführungsbeispiel aus dem gleichen Glas wie der Außenkolben 3 gebildet. Dies sichert die gute Verbindbarkeit der beiden Kolben 3, 6 und ermöglicht eine kostengünstige Herstellung, da an beide Gläser keine hohen Anforderungen gestellt werden und somit ein handelsübliches Glas, insbesondere ein so genanntes Weichglas, verwendet werden kann. Es sind jedoch je nach Ausführung der Einbaulampe 4 auch andere Werkstoffe für die Kolben denkbar, beispielsweise andere Gläser oder auch keramische oder polymerische Werkstoffe. Ebenso ist es denkbar, dass der zylindrische Kolben 6 partiell oder vollständig mit einer ein- oder mehrlagigen Beschichtung versehen ist, die beispielsweise selektiv Wellenlängenbereiche abschirmt, reflektiert oder transmittiert. Ebenso ist eine Mattierung denkbar.

Ob der mit dem Mittenkontakt 12 verbundene Stromzuführungsdraht 9a oder der mit dem Seitenkontakt 11 des Sockels 2, verbundene Stromzuführungsdraht 9b über den Sockel 8 der Einbaulampe 4 hinaus geführt und darum gewendelt wird, ist für die Verwirklichung der Erfindung unerheblich, es sind sogar Ausführungen denkbar, bei denen beide Stromzuführungsdrähte 9a, 9b derart ausgebildet sind.

Anstelle der spiralförmigen Wendelung ist auch eine ringförmige Ausbildung oder eine Kombination der beiden Varianten denkbar. Soll anstelle eines zylindrischen Kolbens 6 eine andere Querschnittsform, beispielsweise ein Oval oder ein Vieleck gewählt werden, ist die Form der Windungen des Drahts 15 selbstverständlich geeignet zu wählen, so dass auch beispielsweise ovale oder vieleckige Windungen denkbar sind.

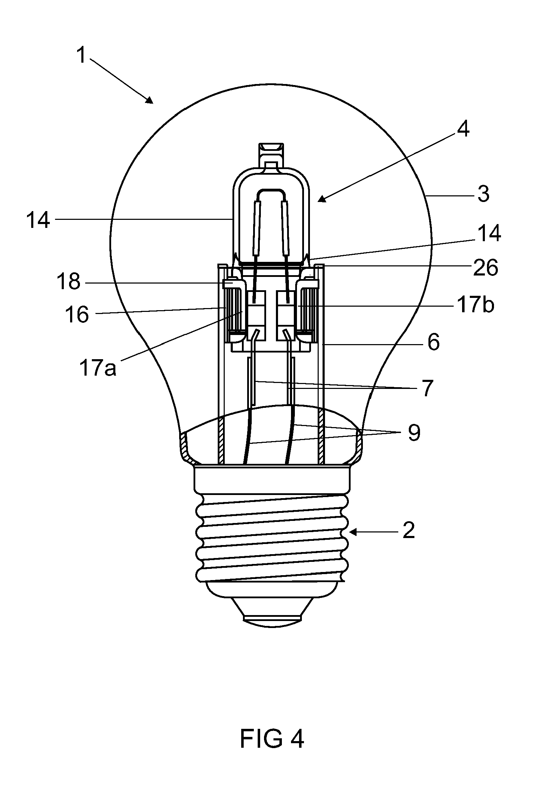

Figur 4 zeigt eine erfindungsgemäße Lampe 1 gemäß einer zweiten Ausführungsform in einer Seitenansicht. Der prinzipielle Aufbau mit Sockel 2, Außenkolben 3, mit dem Außenkolben 3 verschmolzenem zylindrischem Kolben 6 und Einbaulampe 4 entspricht der in Figur 1 gezeigten Lampe 1. Im Gegensatz zum ersten Ausführungsbeispiel ist hier jedoch der zylindrische Kolben 6 nur bis zur Unterkante des Kolbens 14 der Einbaulampe 4 geführt. In dem zylindrischen Kolben 6 ist eine Haltevorrichtung 16 angeordnet, in der die Einbaulampe 4 gehalten ist.

Die Haltevorrichtung 16 besteht im Wesentlichen aus zwei Halteelementen 17, die den Sockel 8 der Einbaulampe 4 umschließen und zwei kreisbogenförmige Halteelemente 18 umfassen, die die Haltevorrichtung 16 in dem zylindrischen Kolben 6 fixieren.

Wie aus Figur 5 ersichtlich, die einen waagerechten Schnitt durch den Sockel 8 der Einbaulampe 4 zeigt, weist der Sockel 8 der Einbaulampe 4 typischerweise einen Doppel-T-Querschnitt auf, bei dem ein Steg 19 mit zwei planparallelen Flächen 20 zwischen seitlichen Flanschen 21 angeordnet ist. Die Halteelemente 17 bestehen im Wesentlichen aus jeweils zwei seitlichen Halteclips 22, die die seitlichen Flansche 21 des Sockels 8 der Einbaulampe 4 federnd umgreifen und dadurch für eine exakte Führung des Sockels 8 sorgen, sowie den kreisbogenförmigen Halteelementen 18.

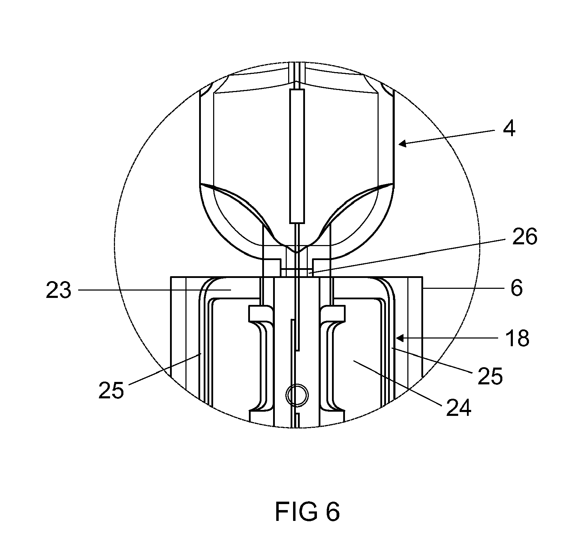

Figur 6 zeigt in einer Schnittbilddarstellung, bei der die Schnittebene durch die Längsachse der Lampe 1 und die Senkrechte zum Steg 19 des Sockels 8 der Einbaulampe 4 aufgespannt ist, dass die kreisbogenförmigen Halteelemente 18 im Wesentlichen durch jeweils zwei Bogenlaschen 23 gebildet werden, die im Inneren jeweils eine Ausnehmung 24 aufweisen, wodurch zum einen Material eingespart wird und zum anderen die Federwirkung der Bogenlaschen 23 hinreichend klein gewählt werden kann um eine Überbeanspruchung des zylindrischen Kolbens 6 zuverlässig zu vermeiden.

Die Bogenlaschen 23 liegen hauptsächlich durch Halterippen 25 an dem zylindrischen Kolben 6 an, was durch die gegenüber einer vollflächig anliegenden Haltelasche reduzierte Anlagefläche das Einführen der Haltevorrichtung 16 in den zylindrischen Kolben 6 erleichtert. Durch Haltenasen 26 wird verhindert, dass die Haltevorrichtung 16 zu weit in den zylindrischen Kolben 6 eingeführt wird. Ein Herausrutschen der Haltevorrichtung 16 und der Einbaulampe 4 wird zusätzlich zu der kraftschlüssigen Fixierung der Einbaulampe 4 durch die Haltevorrichtung 16 auch durch die vom Sockel 2 zu der Einbaulampe 4 reichenden Stromzuführungsdrähte 9 verhindert, die mit den Stromzuführungen 7 der Einbaulampe 4 verschweißt und wie im ersten Ausführungsbeispiel mit dem Sockel 2 der Lampe 1 verbunden sind.

Dennoch müssen bei dieser Ausführungsform die Stromzuführungsdrähte 9 keine oder nur sehr geringe Haltekräfte für die Einbaulampe 4 übernehmen und können daher sehr einfach und dünn ausgeführt werden.

Bei der Montage der Lampe 1 wird zunächst die Einbaulampe 4 in die beiden Halteelemente 18 der Haltevorrichtung 16 eingeführt und dann die Stromzuführungsdrähte 9 mit den Stromzuführungen 7 der Einbaulampe 4 verschweißt, wobei dieser Ablauf auch in umgekehrter Reihenfolge vorgenommen werden könnte. Anschließend werden die Stromzuführungsdrähte 9 und die Haltevorrichtung 16 in den zylindrischen Kolben 6 eingeführt und der Außenkolben 3 darübergestülpt und mit dem zylindrischen Kolben 6 verschmolzen. Die weitere Montage geschieht analog zum ersten Ausführungsbeispiel.

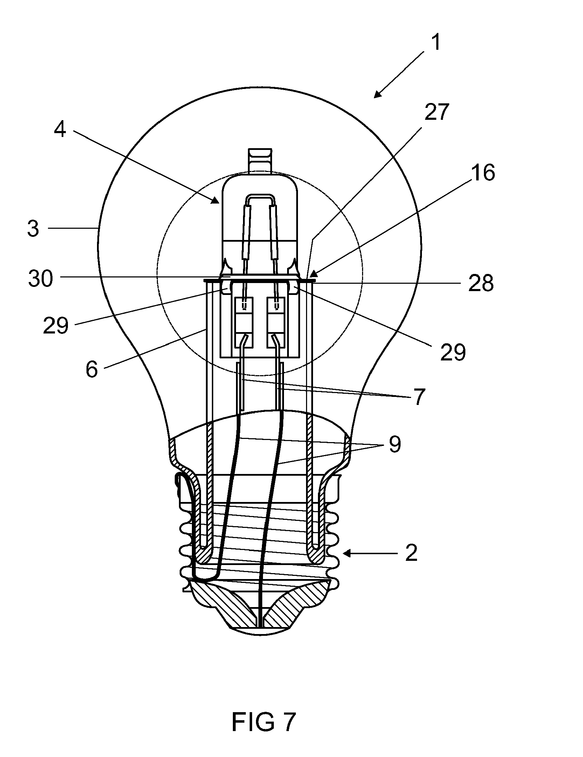

Eine weitere Ausführungsform einer erfindungsgemäßen Lampe 1 ist in Figur 7 in einer Seitenansicht gezeigt. Der prinzipielle Aufbau der Lampe 1 mit Sockel 2, Außenkolben 3, mit dem Außenkolben 3 verschmolzenem zylindrischem Kolben 6 und Einbaulampe 4 entspricht wiederum den in den vorhergehenden Ausführungsbeispielen gezeigten Lampen 1. In diesem Ausführungsbeispiel umfasst die Haltevorrichtung 16 im Wesentlichen eine Scheibe 27, die auf dem oberen Rand 28 des zylindrischen Kolbens 6 aufliegt und mittels vier Federlaschen 29 dort fixiert wird. Die Federlaschen 29 drücken von innen gegen die Wandung des zylindrischen Kolbens 6, wodurch eine kompakte Bauweise, ein einfacher Aufbau und eine leichte Montage ermöglicht werden. Es sind jedoch auch Ausführungen denkbar, bei denen die Federlaschen 29 von außen auf den Kolben 6 wirken, wodurch insbesondere die Belastung des Kolbens 6 durch tangentiale Zugkräfte deutlich reduziert wird.

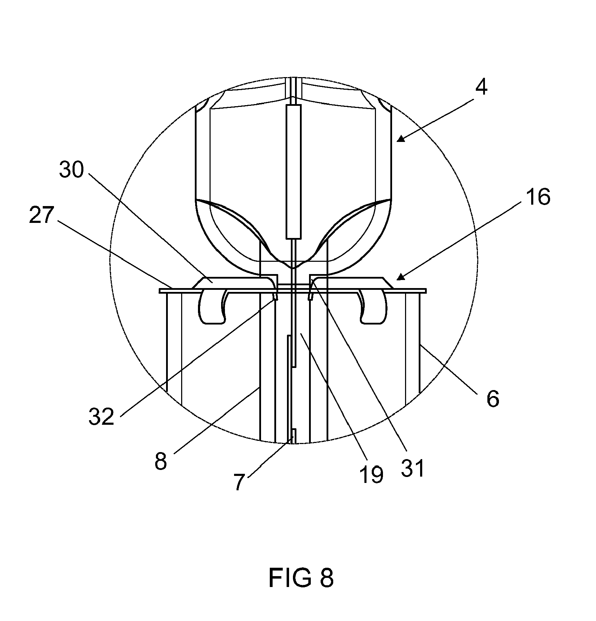

In Figur 8 ist die Haltevorrichtung 16 in einer gegenüber Figur 7 um 90° um die Lampenlängsachse gedrehten Detailansicht gezeigt. Die Scheibe 27 hat in ihrem Zentrum einen erhöhten Bereich 30, in dem eine Ausnehmung 31 eingebracht ist. Die gestufte Gestaltung der Scheibe 27 ergibt eine optimierte Steifigkeit der Scheibe 27. In der Ausnehmung 31 ist der Sockel 8 der Einbaulampe 4 gehaltert. Eine optimale Führung und Fixierung der Einbaulampe 4 wird dabei erreicht, indem die Ausnehmung 31 annähernd der Querschnittsfläche des Sockels 8 der Einbaulampe 4 entspricht, d.h. im vorliegenden Fall annähernd doppel-T-förmig ausgeführt ist.

Im Bereich der Stegs 19 des Doppel-T-Profils weist die Scheibe 16 Federlaschen 32 auf, die die Einbaulampe 4 sicher in Axialrichtung fixieren und so zusammen mit der Scheibe 27 als Halteclip wirken.

Die Stromzuführungen 7 der Einbaulampe 4 sind mit den Stromzuführungsdrähten 9 wie in den vorhergehenden Ausführungsbeispielen gezeigt verschweißt und mit dem Sockel 2 verbunden. Auch bei dieser Anordnung sind die Stromzuführungsdrähte 9 weitgehend von Haltekräften entlastet und dienen nur als zusätzliche Sicherungsmaßnahme gegen das Herausfallen der Einbaulampe 4, wenn diese nach unten zeigt.

Die Montage erfolgt analog zum vorherigen Ausführungsbeispiel, indem zunächst die Einbaulampe 4 in die Ausnehmung 31 der Scheibe 27 eingeführt und dann die Stromzuführungsdrähte 9 mit den Stromzuführungen 7 der Einbaulampe verschweißt werden, wobei dieser Ablauf auch in umgekehrter Reihenfolge vorgenommen werden kann. Bei der ersten Variante kann jedoch die Einbaulampe 4 besonders einfach mittels der Haltevorrichtung 16 fixiert werden. Anschließend werden die Stromzuführungsdrähte 9 und die Haltevorrichtung 16 in den zylindrischen Kolben 6 eingeführt und der Außenkolben 3 darübergestülpt und mit dem zylindrischen Kolben 6 verschmolzen. Die weitere Montage geschieht analog zum ersten Ausführungsbeispiel.

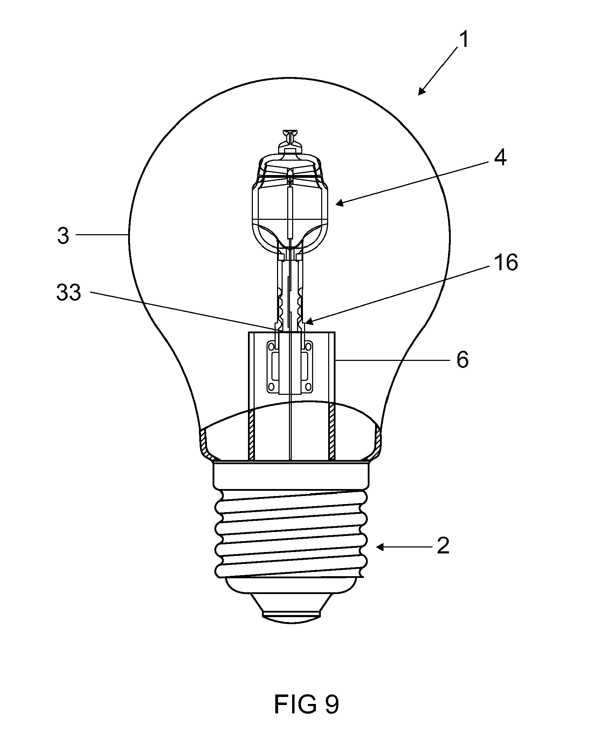

Figur 9 zeigt eine erfindungsgemäße Lampe 1 gemäß einer vierten Ausführungsform in einer seitlichchen Darstellung. Der prinzipielle Aufbau mit Sockel 2, Außenkolben 3, mit dem Außenkolben 3 verschmolzenem zylindrischem Kolben 6 und Einbaulampe 4 entspricht der in Figur 1 gezeigten Lampe 1. Im Gegensatz zum ersten Ausführungsbeispiel ist hier jedoch der zylindrische Kolben 6 nur bis zur Unterkante 33 der Einbaulampe 4 geführt. In dem zylindrischen Kolben 6 ist eine Haltevorrichtung 16 angeordnet.

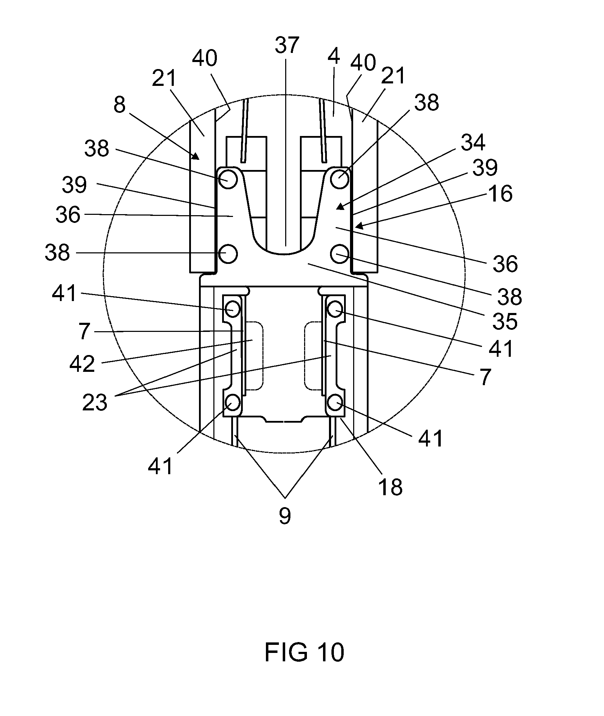

Wie aus Figur 10 ersichtlich, die die Haltevorrichtung 16 als Detaildarstellung und gegenüber Figur 9 um 90° gedreht zeigt, besteht die Haltevorrichtung 16 im Wesentlichen aus einem Halteclip 34, der den Sockel 8 der Einbaulampe 4 hält, sowie zwei kreisbogenförmigen Halteelementen 18, die die Haltevorrichtung 16 in dem zylindrischen Kolben 6 fixieren. Der Radius der kreisbogenförmigen Halteelemente 18, von denen hier nur das vordere dargestellt ist, entspricht dabei praktisch dem Innenradius des zylindrischen Kolbens 6, wodurch die Halteelemente 18 dicht an dem Kolben 6 anliegen und eine gute Federwirkung erzielt wird.

Der Halteclip 34 besteht im Wesentlichen aus zwei planparallel angeordneten Haltelaschen 35, von denen in Figur 10 nur die vordere sichtbar ist. Die Haltelaschen 35 wiederum sind aus jeweils zwei Haltezungen 36 gebildet, zwischen denen sich eine U-förmige Ausnehmung 37 befindet. Die Haltelaschen 35 liegen federnd am Sockel 8 der Einbaulampe 4 an und weisen jeweils vier Haltenoppen 38 auf, die durch ihre Ausrundung das Einführen der Einbaulampe 4 in den Halteclip 34 erleichtern und für einen sicheren Halt sorgen. Zur besseren seitlichen Führung des Sockels 8 sind die Haltezungen 36 so beabstandet, dass die Außenkanten 39 der Haltezungen 36 an den Innenkanten 40 der Flansche 21 des Doppel-T-Profils anliegen.

Axial beabstandet von dem Halteclip 34 sind die Halteelemente 18 angeordnet. Die zwei kreisbogenförmigen Halteelemente 18 werden im Wesentlichen durch jeweils zwei Bogenlaschen 23 gebildet. Diese Bogenlaschen 23 liegen hauptsächlich durch Haltenoppen 41 an dem zylindrischen Kolben 6 an, was das Einführen der Haltevorrichtung 16 in den Kolben 6 erleichtert und für einen sicheren Halt der Haltevorrichtung 16 in dem zylindrischen Kolben 6 sorgt. Die Gestaltung der Haltevorrichtung 16 mit einer Öffnung 42 zwischen den Halteelementen 18 ermöglicht es, die Stromzuführungsdrähte 9 mit den Stromzuführungen 7 der Einbaulampe 4 zu verschweißen, auch wenn die Einbaulampe 4 bereits in den Haltclip 34 eingeführt ist.

Durch die axiale Beabstandung von Halteclip 34 und Halteelementen 18 kann die Haltevorrichtung 16 mit besonders kleinem Querschnitt ausgeführt werden und der zylindrische Kolben 6 kann kürzer und mit geringerem Durchmesser als in den vorangegangenen Ausführungsbeispielen ausgeführt werden. Ein möglichst kleiner Durchmesser des zylindrischen Kolbens 6 ist besonders vorteilhaft, weil dieser dann auch in Lampen mit kleinem Sockel 2 eingesetzt werden kann und somit eine universelle Verwendung eines zylindrischen Kolbens 6 für unterschiedliche Lampen 1 mit jeweils verschiedenen Sockelgrößen ermöglicht wird.

Auch bei dieser Ausführungsform müssen die Stromzuführungsdrähte 9 keine oder nur sehr geringe Haltekräfte für die Einbaulampe 4 übernehmen und können daher sehr einfach und dünn ausgeführt werden.

Bei der Montage der Lampe 1 wird, analog zu den vorhergehenden Ausführungsbeispielen, zunächst die Einbaulampe 4 in den Halteclip 34 der Haltevorrichtung 16 eingeführt und dann die Stromzuführungsdrähte 9 mit den Stromzuführungen 7 der Einbaulampe 4 verschweißt, wobei dieser Ablauf auch in umgekehrter Reihenfolge vorgenommen werden kann. Anschließend werden die Stromzuführungsdrähte 9 und die Haltevorrichtung 16 in den zylindrischen Kolben 6 eingeführt und der Außenkolben 3 darübergestülpt und mit dem zylindrischen Kolben 6 verschmolzen. Die weitere Montage geschieht analog zum ersten Ausführungsbeispiel.

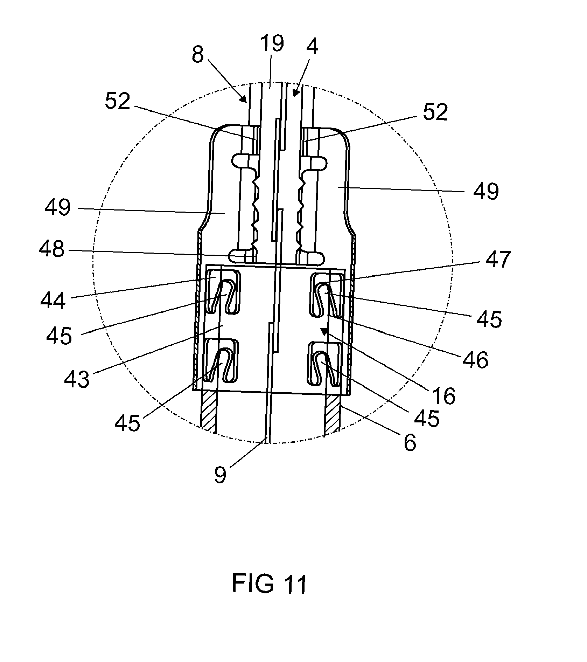

Eine ähnliche Ausführungsform ist als fünftes Ausführungsbeispiel in einer Detailansicht in Figur 11 gezeigt, wobei hier nur der zylindrische Kolben 6 mit der Haltevorrichtung 16 und der Einbaulampe 4 in einer Schnittdarstellung gezeigt sind, bei der die Schnittebene durch die Längsachse der Lampe 1 und die Senkrechte zum Steg 19 des Sockels 8 der Einbaulampe 4 aufgespannt ist.

Bei diesem Ausführungsbeispiel wird die Haltevorrichtung 16 im Wesentlichen aus einem zylindrischen Teil 43 gebildet, der den Kolben 6 umfasst und dessen Innendurchmesser annähernd dem Außendurchmesser des Kolbens 6 entspricht. An dem zylindrischen Teil 43 sind in Ausnehmungen 44 Federlaschen 45 angeordnet, die den Maßunterschied zwischen dem Innendurchmesser des zylindrischen Teils 43 und dem Außendurchmesser des Kolbens 6 ausgleichen und so für einen festen Halt der Haltevorrichtung 16 auf dem zylindrischen Kolben 6 sorgen. Die Ausbildung der Federlaschen 45, die an der unteren Kante 46 an den zylindrischen Teil 43 angebunden sind und mit der oberen Kante 47 nach innen ragen, sorgt sowohl für ein einfaches Einführen des Kolbens 6 in den zylindrischen Teil 43 als auch für eine gute Fixierung in Gegenrichtung. Dadurch müssen die Stromzuführungsdrähte 9 auch bei dieser Ausführungsform nur sehr geringe Haltekräfte für die Einbaulampe 4 übernehmen und können daher sehr einfach und dünn ausgeführt werden.

Im oberen Bereich weist die Haltevorrichtung 16 zwei rechteckförmige Ausnehmungen 48 auf, durch die der zylindrische Grundkörper in zwei Zylindersegmente 49 unterteilt wird. In diesen Ausnehmungen 48 ist die Einbaulampe 4 mittels Federlaschen 52 gehalten.

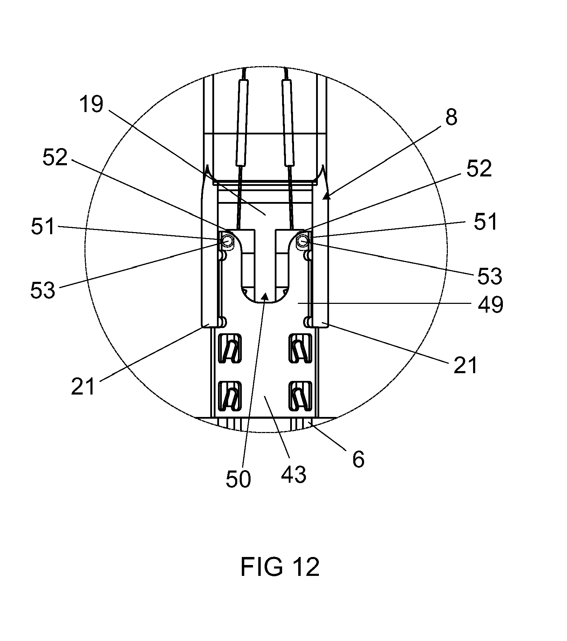

Wie aus Figur 12 ersichtlich, die eine Seitenansicht des fünften Ausführungsbeispiels mit einer gegenüber Figur 11 um 90° gedrehten Blickrichtung darstellt, weisen die Zylindersegmente 49 wiederum jeweils eine U-förmige Ausnehmung 50 auf, wodurch der Sockel 8 der Einbaulampe 4 weitgehend sichtbar bleibt und Material eingespart wird. Die an den Kanten 51 der rechteckförmigen Ausnehmungen 48 vorgesehenen Federlaschen 52 weisen Haltenoppen 53 mit den bereits beschriebenen Vorteilen auf.

Der Durchmesser des zylindrischen Teils 43 und damit auch des zylindrischen Kolbens 6 ist unter Berücksichtigung der Dicke des Stegs 19 dabei so gewählt, dass an der Innenseite der Flansche 21 jeweils die Außenkanten 51 der Zylindersegmente 49 anliegen. Dadurch ist eine Führung in radialer Richtung parallel zum Steg 19 des doppel-T-förmigen Sockels 8 auf einfache Weise realisierbar und die Einbaulampe 4 ist allseitig fixiert.

Bei der Montage der Lampe 1 werden zunächst die Stromzuführungsdrähte 9 mit den Stromzuführungen 7 der Einbaulampe 4 verschweißt, dann die Einbaulampe 4 in die Zylindersegmente 49 der Haltevorrichtung 16 eingeführt und anschließend die Stromzuführungsdrähte 9 und die Haltevorrichtung 16 auf den zylindrischen Kolben 6 aufgeschoben. Schließlich wird der Außenkolben 3 darübergestülpt und mit dem zylindrischen Kolben 6 verschmolzen. Die weitere Montage geschieht analog zum ersten Ausführungsbeispiel.

Anstelle des in den Ausführungsbeispielen gezeigten und für eine Allgebrauchsglühlampe typischen Außenkolbens 3 mit der Bezeichnung A55 sind selbstverständlich auch andere Kolbenformen, wie beispielsweise die Typen A60, R63, R80 oder G95 denkbar, wie auch anstelle des gezeigten Schraubsockels vom Typ E27 andere Sockelgrößen wie beispielsweise E14 oder E40 sowie andere Sockeltypen wie beispielsweise Bajonett- oder Stecksockel möglich sind. Selbstverständlich müssen die Stromzuführungsdrähte 9 nicht notwendigerweise einen kreisförmigen Querschnitt aufweisen sondern können vielmehr jede beliebige Form, insbesondere rechteckige oder dreieckige Formen sowie hohle Querschnitte aufweisen.

## Patentansprüche

1. Einseitig gesockelte elektrische Lampe (1) mit einem in einem Sockel (2) gelagerten Außenkolben (3) und mindestens einer innerhalb des Außenkolbens (3) angeordneten Einbaulampe (4), vorzugsweise einer Hochvolt-Halogenlampe, und mindestens zwei Stromzuführungsdrähten (9, 9a, 9b) von dem Sockel (2) zu der Einbaulampe (4), **dadurch gekennzeichnet, dass** die mindestens zwei Stromzuführungsdrähte (9, 9a, 9b) von einem vorzugsweise zylindrischen Kolben (6) aus einem nichtleitenden Werkstoff umgeben sind und der zylindrische Kolben (6) mit dem Außenkolben (3) verbunden, vorzugsweise verschmolzen, ist.

2. Einseitig gesockelte elektrische Lampe (1) nach Anspruch 1, **dadurch gekennzeichnet, dass** der zylindrische Kolben (6) aus einem lichtdurchlässigen Werkstoff, vorzugsweise identisch mit dem für den Außenkolben (3) verwendeten Werkstoff, insbesondere Glas, gebildet ist.

3. Einseitig gesockelte elektrische Lampe (1) nach Anspruch 1 oder 2, **dadurch gekennzeichnet, dass** die Einbaulampe (4) von dem vorzugsweise zylindrischen Kolben (6) zumindest teilweise umgeben ist.

4. Einseitig gesockelte elektrische Lampe (1) nach einem der Ansprüche 1 bis 3, **dadurch gekennzeichnet, dass** mindestens eine Haltevorrichtung (16) zur Befestigung der Einbaulampe (4) an dem vorzugsweise zylindrischen Kolben (6) vorgesehen ist.

5. Einseitig gesockelte elektrische Lampe (1) nach einem der Ansprüche 1 bis 4, **dadurch gekennzeichnet, dass** die Haltevorrichtung (16) mindestens ein Federelement (22, 23, 29, 32, 35, 45, 52) aufweist.

6. Einseitig gesockelte elektrische Lampe (1) nach einem der Ansprüche 1 bis 5, **dadurch gekennzeichnet, dass** die Haltevorrichtung (16) mindestens einen Halteclip (22, 34, 49)für die Einbaulampe (4), umfassend mindestens zwei, vorzugsweise annähernd planparallel angeordnete Haltelaschen (22, 35, 52), aufweist.

7. Einseitig gesockelte elektrische Lampe (1) nach Anspruch 6, **dadurch gekennzeichnet, dass** mindestens eine der Haltelaschen (35, 52) mindestens ein Federelement (35, 52) umfasst, insbesondere als Federelement (35, 52) ausgebildet ist.

8. Einseitig gesockelte elektrische Lampe (1) nach einem der Ansprüche 1 bis 7, **dadurch gekennzeichnet, dass** die Haltevorrichtung (16) mittels mindestens eines Federelements (23, 29, 45) mit dem vorzugsweise zylindrischen Kolben (6) kraftschlüssig verbindbar ist.

9. Einseitig gesockelte elektrische Lampe (1) nach Anspruch 8, **dadurch gekennzeichnet, dass** das Federelement (23, 29, 45) mit mindestens einem annähernd kreisbogenförmigen Halteelement (18, 43) in Wirkverbindung steht, wobei der Durchmesser des Kreisbogens annähernd dem Innendurchmesser oder dem Außendurchmesser des vorzugsweise zylindrischen Kolbens (6) entspricht.

10. Einseitig gesockelte elektrische Lampe (1) nach einem der Ansprüche 8 oder 9, **dadurch gekennzeichnet, dass** das annähernd kreisbogenförmige Halteelement (18, 43) und die Haltelaschen (35, 52) des Halteclips (34) axial voneinander beabstandet angeordnet sind.

11. Einseitig gesockelte elektrische Lampe (1) nach einem der Ansprüche 8 bis 10, **dadurch gekennzeichnet, dass** die Kraftrichtung des Federelements (23) des annähernd kreisbogenförmigen Halteelements (18) und der Haltelaschen (22) des Halteclips annähernd orthogonal zueinander angeordnet sind.

12. Einseitig gesockelte elektrische Lampe (1) nach einem der Ansprüche 8 bis 10, **dadurch gekennzeichnet, dass** die Kraftrichtung des Federelements (29) des annähernd kreisbogenförmigen Halteelements (18) und der Haltelaschen (35) annähernd parallel zueinander angeordnet sind

13. Einseitig gesockelte elektrische Lampe (1) nach einem der Ansprüche 1 bis 12, **dadurch gekennzeichnet, dass** die Haltevorrichtung (16) ein im Wesentlichen scheibenförmiges Element (27) mit einer Ausnehmung (31) zur Aufnahme der Einbaulampe (4) aufweist, wobei das scheibenförmige Element (27) annähernd die Querschnittsfläche des vorzugsweise zylindrischen Kolbens (6) aufweist.

14. Einseitig gesockelte elektrische Lampe (1) nach Anspruch 13, **dadurch gekennzeichnet, dass** die Ausnehmung (31) zur Aufnahme der Einbaulampe (4) annähernd die Kontur der Querschnittsfläche des Sockels (8) der Einbaulampe (4) aufweist.

15. Einseitig gesockelte elektrische Lampe (1) nach einem der Ansprüche 13 oder 14, **dadurch gekennzeichnet, dass** das scheibenförmige Element (27) als Stanzteil aus einem metallischen Werkstoff gebildet ist.

16. Einseitig gesockelte elektrische Lampe (1) nach einem der Ansprüche 13 bis 15, **dadurch gekennzeichnet, dass** Federlaschen (29, 32) zur Fixierung des scheibenförmigen Elements (27) in dem vorzugsweise zylindrischen Kolben (6) und/oder der Einbaulampe (4) in dem scheibenförmigen Element (27) vorgesehen sind.

17. Einseitig gesockelte elektrische Lampe (1) nach einem der Ansprüche 1 bis 16, **dadurch gekennzeichnet, dass** die Stromzuführungsdrähte (9a, 9b) als Haltevorrichtung für die Einbaulampe (4) ausgeführt sind.

18. Einseitig gesockelte elektrische Lampe nach einem der Ansprüche 1 bis 17, **dadurch gekennzeichnet, dass** zwischen dem Kolben (14) der Einbaulampe (4) und dem vorzugsweise zylindrischen Kolben (6) mindestens ein um den Kolben (14) der Einbaulampe (4) vorzugsweise spiralförmig und/oder ringförmig gewundener Drahtabschnitt (15) angeordnet ist.

19. Einseitig gesockelte elektrische Lampe (1) nach Anspruch 18, **dadurch gekennzeichnet, dass** der gewundene Drahtabschnitt (15) mit einem von dem Sockel (2) zu der Einbaulampe (4) führenden Stromzuführungsdraht (9a, 9b) verbunden, insbesondere verschweißt, ist.

20. Einseitig gesockelte elektrische Lampe (1) nach einem der Ansprüche 18 oder 19, **dadurch gekennzeichnet, dass** der gewundene Drahtabschnitt (15) und mindestens ein von dem Sockel (2) zu der Einbaulampe (4) führender Stromzuführungsdraht (9a) einstückig ausgebildet sind.

21. Einseitig gesockelte elektrische Lampe (1) nach einem der Ansprüche 1 bis 20, **dadurch gekennzeichnet, dass** mindestens ein von dem Sockel (2) zu der Einbaulampe (4) führender Stromzuführungsdraht (9a, 9b) mit mindestens einer Stromzuführung (7) der Einbaulampe (4) durch eine Schweißverbindung (13) verbunden ist.

22. Einseitig gesockelte elektrische Lampe (1) nach einem der Ansprüche 1 bis 21, **dadurch gekennzeichnet, dass** mindestens ein von dem Sockel (2) zu der Einbaulampe (4) führender Stromzuführungsdraht (9a) im Bereich des Sockels (2) U-förmig um den vorzugsweise zylindrischen Kolben (6) geführt ist.

23. Einseitig gesockelte elektrische Lampe (1) nach einem der Ansprüche 1 bis 22, **dadurch gekennzeichnet, dass** die von dem Sockel (2) zu der Einbaulampe (4) führenden Stromzuführungsdrähte (9a, 9b) aus einer Nickel-Kupfer-Legierung gebildet sind.

24. Verfahren zur Herstellung einer einseitig gesockelten elektrischen Lampe (1) mit einem in einem Sockel (2) gelagerten Außenkolben (3) und mindestens einer innerhalb des Außenkolbens (3) angeordneten Einbaulampe (4), vorzugsweise einer Hochvolt-Halogenlampe, und mindestens zwei von dem Sockel (2) zu der Einbaulampe (4) führenden Stromzuführungsdrähten (9, 9a, 9b), **gekennzeichnet durch** folgende Schritte:
a) die Einbaulampe (4) wird mit den Stromzuführungsdrähten (9, 9a, 9b) verbunden, vorzugsweise verschweißt,
b) die Stromzuführungsdrähte (9, 9a, 9b) werden in einen vorzugsweise zylindrischen Kolben (6) aus einem nichtleitenden Werkstoff eingeführt, so dass die mindestens zwei Stromzuführungsdrähte (9a, 9b) von dem vorzugsweise zylindrischen Kolben (6) weitgehend umgeben sind,
c) der Außenkolben (3) wird mit dem vorzugsweise zylindrischen Kolben (6) verbunden, vorzugsweise verschmolzen,
d) eine Stromzuführung (9a) wird derart seitlich abgebogen, dass Kontakt mit dem Sockel (2) herstellbar ist,
e) der Sockel (2) wird auf den Außenkolben (3) aufgebracht und vorzugsweise mit auf dem Sockel (2) aufgebrachtem Kitt verbunden,
f) die Stromzuführungsdrähte (9, 9a, 9b) werden abgelängt und mit dem Sockel (2) vorzugsweise **durch** Lötung verbunden.

25. Verfahren nach Anspruch 24, **dadurch gekennzeichnet, dass** zwischen den Schritten a) und b) mindestens ein Stromzuführungsdraht (9a) vorzugsweise spiralförmig und/oder ringförmig um den Kolben (14) der Einbaulampe (4) gewendelt wird.

26. Verfahren nach Anspruch 24, **dadurch gekennzeichnet, dass** mindestens ein Stromzuführungsdraht (9a) vor der Verbindung mit der Einbaulampe (4) vorzugsweise ringförmig und/oder spiralförmig gewendelt wird.

27. Verfahren nach einem der Ansprüche 24 bis 26, **dadurch gekennzeichnet, dass** vor oder nach Schritt a) die Einbaulampe in eine Haltevorrichtung eingebracht wird.
